# EUROPÄISCHE PATENTSCHRIFT

(11) **EP 2 248 699 B1**
(45) Veröffentlichungstag und Bekanntmachung des Hinweises auf die Patenterteilung: **28.12.2011**
(21) Anmeldenummer: 10156304.7
(22) Anmeldetag: 12.03.2010
(51) Int. Cl.: B60K 17/346

(54) **Antriebsstrang eines Kraftfahrzeuges umfassend ein Stufenlos-Getriebe**
Powertrain for a vehicle comprising an infinitely adjustable gearbox
Conducteur de commande d'un véhicule automobile comportant un engrenage en continu

(30) Priorität: 05.05.2009 DE 102009002807
(43) Veröffentlichungstag der Anmeldung: 10.11.2010
(73) Patentinhaber: ZF Friedrichshafen AG, 88038 Friedrichshafen (DE)
(72) Erfinder: Grossmann, Christoph, 94036, Passau (DE); Kerschbaummayr, Alfred, 4400, Steyr (AT)

(56) Entgegenhaltungen:
- EP-A2- 1 193 103
- DE-A1- 4 131 572
- DE-A1-102006 057 836
- GB-A- 2 444 367

## Beschreibung

Die Erfindung betrifft den Antriebsstrang eines Kraftfahrzeuges umfassend ein Stufenlos-Getriebe gemäß dem Oberbegriff des Patentanspruchs 1.

In Kraftfahrzeugen umfassend ein Stufengetriebe mit permanentem Allradantrieb werden nach dem Stand der Technik Längsverteilergetriebe eingesetzt, die der zentralen Leistungsverteilung über ein Differential auf zumindest zwei angetriebene Achsen des Fahrzeugs dienen, wobei zur Vermeidung von Verspannungen im Antriebsstrang diese Differentiale in der Regel als Kegelraddifferentiale mit einer Drehmomentverteilung von 50:50 ausgeführt sind.

Ferner sind die in Kraftfahrzeugen umfassend ein Stufengetriebe eingesetzten Längsverteilergetriebe zur Verringerung der Geschwindigkeit im Rahmen eines Kriechganges und/oder zur Erhöhung der Zugkraft mit einer schaltbaren Zahnrad-Stufe bzw. Rangegruppe ausgeführt.

Bei Kraftfahrzeugen umfassend ein Stufenlos-Getriebe sind aus dem Stand der Technik nur Ackerschlepperausführungen bekannt, bei denen die Längsverteilergetriebe Stirnraddifferentiale ohne eine Rangegruppe aufweisen.

Aus der gattungsgemäβen DE 10 2006 057 836 A1 geht ein Antriebsstrang eines universellen allradgetriebenen Kleinlastkraftwagens und Geräteträgers für die Landwirtschaft und für kommunale Aufgaben hervor, bei dem eine mechanisch-hydrostatische Leistungsverzweigung beinhaltende Baueinheit einer Ackerschlepper-Stufenlosgetriebeeinheit mit einem Adaptionsgetriebe kombiniert wird, so dass eine hohe Fahrgeschwindigkeit erreicht wird. Bei dem bekannten Antriebsstrang ist ein Längsverteilergetriebe vorgesehen, mittels dessen die Antriebsleistung auf zumindest zwei Achsen verteilt wird.

Stufenlos-Getriebe, insbesondere mechanisch-hydraulisch leistungsverzeigte Stufenlos-Getriebe sind prinzipbedingt durch den maximal zulässigen Hochdruck des Hydraulikkreislaufs zugkraftbegrenzt, was dazu führt, dass bei derartigen Getrieben mit einer großen Getriebespreizung zur Erzielung hoher Fahrgeschwindigkeiten das Zugkraftangebot bei kleinen Fahrgeschwindigkeiten stark reduziert ist.

Der vorliegenden Erfindung liegt die Aufgabe zugrunde, einen Antriebsstrang eines Kraftfahrzeuges umfassend ein Stufenlos-Getriebe und ein Längsverteilergetriebe anzugeben, bei dem bei niedriger Geschwindigkeit eine Steigerung der Zugkraft erzielbar ist. Zudem soll ein hoch aufgelöster Kriechgang realisiert werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Antriebsstrang eines Kraftfahrzeuges umfassend ein Stufenlos-Getriebe und ein Längsverteilergetriebe vorgeschlagen, bei dem das Längsverteilergetriebe ein Kegelraddifferential zur Leistungsverteilung auf die Gelenkwellenanschlussflansche zu den angetriebenen Achsen des Kraftfahrzeugs und eine Rangegruppe zur Realisierung eines hoch aufgelösten Kriechgangs aufweist.

Gemäß der Erfindung ist das Längsverteilergetriebe mit dem Abtrieb des Stufenlos-Getriebes verbunden, wobei es ein Schaltelement aufweist, durch dessen Betätigung in der Rangegruppe ein Straßengang oder ein Geländegang mit hoher Untersetzung geschaltet werden kann. Die Antriebsleistung der Rangegruppe wird vorzugsweise über eine Radpaarung auf das Kegelraddifferential übertragen, um anschließend auf die Gelenkwellenanschlussflansche zu den angetriebenen Achsen verteilt zu werden.

Hierbei kann vorgesehen sein, dass das Kegelraddifferential eine Differentialsperre aufweist; ferner kann der Antriebsstrang eine Parksperre oder Parkbremse aufweisen.

Erfindungsgemäß können die Schaltelemente der Rangegruppe, der optionalen Parksperre und der optionalen Differentialsperre als form- oder reibschlüssige Schaltelemente ausgeführt sein.

Die Erfindung wird im Folgenden anhand der beigefügten Figuren beispielhaft näher erläutert. Es zeigen:
- Figur 1:: Eine schematische Ansicht einer bevorzugten Ausführungsform eines erfindungsgemäßen Antriebsstrangs eines Kraftfahrzeuges umfassend ein Stufenlos-Getriebe und ein Längsverteilergetriebe;
- Figur 2:: Eine schematische Ansicht einer weiteren Ausführungsform eines erfindungsgemäßen Antriebsstrangs eines Kraftfahrzeuges um- fassend ein Stufenlos-Getriebe und ein Längsverteilergetriebe; und
- Figur 3:: Eine schematische Ansicht einer dritten Ausführungsform eines erfindungsgemäßen Antriebsstrangs eines Kraftfahrzeuges um- fassend ein Stufenlos-Getriebe und ein Längsverteilergetriebe.

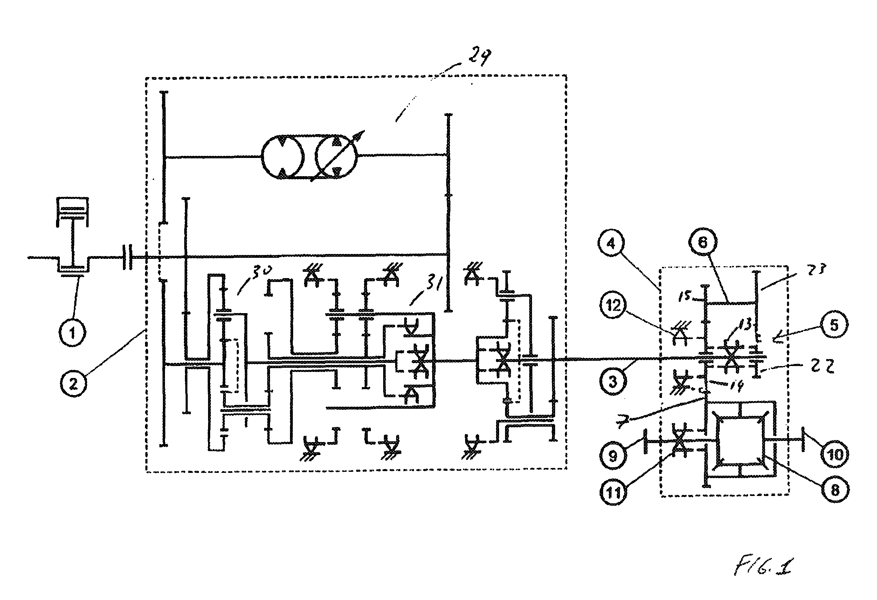

Der in Figur 1 gezeigte Antriebsstrang umfasst einen Verbrennungsmotor 1, der ein Stufenlos-Getriebe 2 antreibt, wobei der Abtrieb 3 des Stufenlos-Getriebes 2 mit einem Längsverteilergetriebe 4, umfassend eine Rangegruppe 5 verbunden ist.

Die Rangegruppe 5 umfasst ein auf dem Abtrieb 3 des Stufenlos-Getriebes 2 angeordnetes Schaltelement 13, mittels dessen zur Erzielung eines Geländeganges ein erstes Losrad 22 mit dem Abtrieb 3 lösbar verbindbar ist, wobei das Losrad 22 mit einem ersten Festrad 23 einer Vorgelegewelle 6 kämmt, wobei die Leistung von der Vorgelegewelle 6 über ein zweites Festrad 15, ein zweites auf dem Abtrieb 3 angeordnetes Losrad 14 und eine mit dem Kegelraddifferential 8 verbundene Verzahnung 7 auf das Kegelraddifferential 8 übertragen wird.

Zur Realisierung eines Straßenganges wird das zweite Losrad 14 durch entsprechende Betätigung des Schaltelementes 13 mit dem Abtrieb 3 drehfest verbunden, so dass die Leistung über dieses Losrad 14 auf das Kegelraddifferential 8 übertragen wird.

Bei dem in Figur 1 gezeigten Ausführungsbeispiel wird durch den zweifachen Zahneingriff des Losrades 14 eine besonders kompakte Bauweise erzielt. Hierbei kämmt das auf dem Abtrieb 3 angeordnete Losrad 14 zum Einen mit dem Festrad 15 auf der Vorgelegewelle 6 und zum Anderen mit einem Zahnrad des Kegelraddifferential 8.

Im Kegelraddifferential 8 findet eine Leistungsverteilung auf die Gelenkwellenanschlussflansche zur Vorderachse 9 bzw. zur Hinterachse 10 statt. In den Figuren 1, 2 und 3 ist mit dem Bezugszeichen 11 eine optionale Differentialsperre und mit dem Bezugszeichen 12 eine optionale Parksperre bezeichnet.

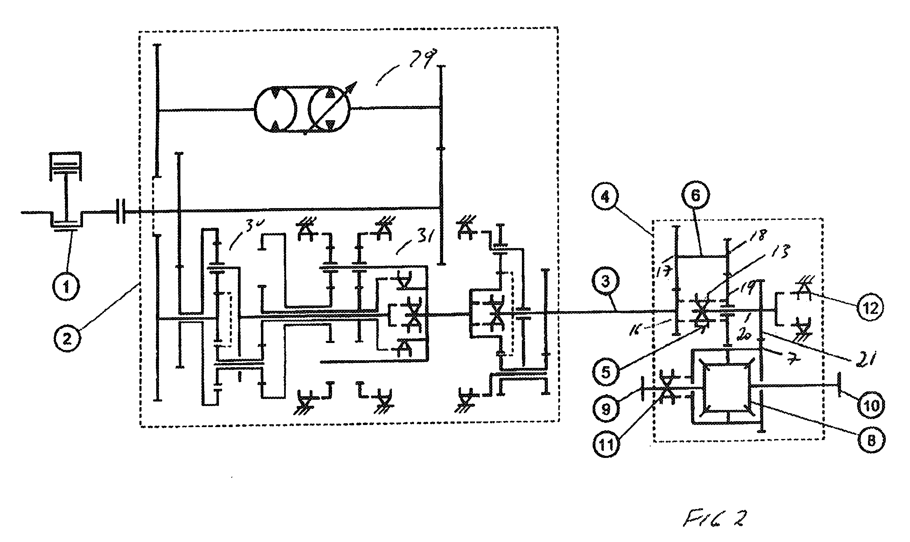

Der doppelte Zahneingriff gemäß Figur 1 kann vermieden werden, wie anhand Figur 2 veranschaulicht. Hierbei ist mit dem Abtrieb 3 des Stufenlos-Getriebes 2 ein Festrad 16 verbunden, welches mit einem Festrad 17 der Vorgelegewelle 6 kämmt, wobei ein weiteres Festrad 18 der Vorgelegewelle 6 mit einem Losrad 19 in Eingriff steht, welches durch entsprechende Betätigung des auf dem Abtrieb 20 des Verteilergetriebes angeordneten Schaltelementes 13 mit dem Abtrieb 20 des Verteilergetriebes zum Schalten eines Geländeganges lösbar verbindbar ist.

Durch eine entsprechende Betätigung des Schaltelementes 13 kann der Abtrieb 20 des Verteilergetriebes mit dem Abtrieb 3 des Stufenlos-Getriebes lösbar verbunden werden, wodurch ein Straßengang realisiert wird. Wie Figur 2 zu entnehmen, ist der Abtrieb 20 des Verteilergetriebes über ein Festrad 21 und eine mit dem Kegelraddifferential 8 verbundene Verzahnung 7 mit dem Kegelraddifferential 8 verbunden und treibt dieses an.

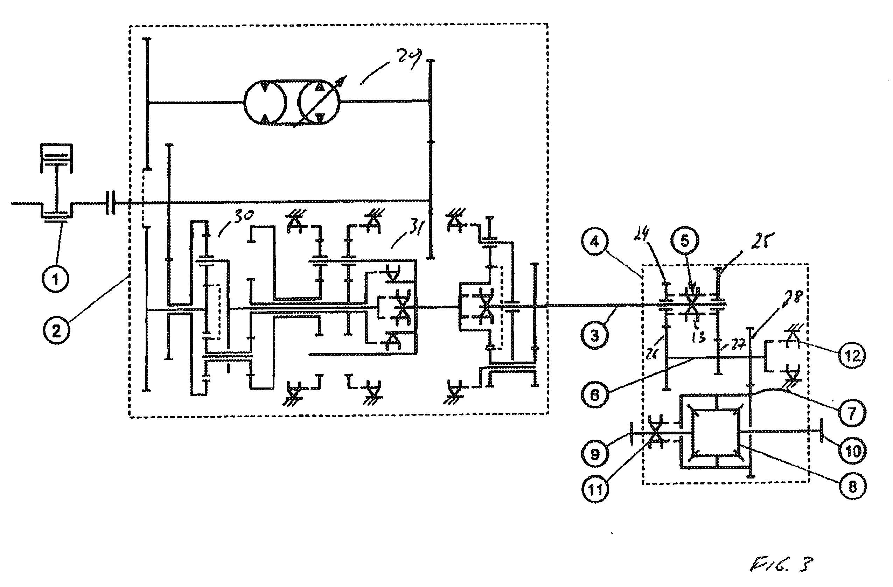

Ein weiteres erfindungsgemäßes Ausführungsbeispiel eines Antriebsstrangs ist Gegenstand der Figur 3. Hierbei wird die Antriebsleistung sowohl im Straßen- als auch im Geländegang der Rangegruppe über eine Übersetzung auf die Vorgelegewelle 6 übertragen.

Wie aus Figur 3 ersichtlich, sind auf dem Abtrieb 3 des Stufenlos-Getriebes 2 ein erstes Losrad 24 und ein zweites Losrad 25 der Rangegruppe 5 angeordnet, die mittels eines Schaltelementes 13 der Rangegruppe zum Schalten des jeweiligen Ganges mit dem Abtrieb 3 lösbar verbindbar sind, wobei die Losräder 24, 25 jeweils mit einem auf einer Vorgelegewelle 6 angeordneten Festrad 26, 27 kämmen und wobei zur Übertragung der Leistung auf das Kegelraddifferential 8 auf der Vorgelegewelle 6 ein weiteres Festrad 28 angeordnet ist, welches mit einer mit dem Kegelraddifferential 8 verbundenen Verzahnung 7 kämmt.

Bei dem gezeigten Beispielen ist das Stufenlos-Getriebe 2 als stufenloses hydrostatisch-mechanisches Leistungsverzweigungsgetriebe ausgeführt, welches nach dem Stand der Technik ein stufenlos verstellbares Hydrostatgetriebe 29 mit einer volumenverstellbaren und einer volumenkonstanten Einheit, ein Summierungsgetriebe 30 und ein Bereichsgetriebe 31 mit mehreren schaltbaren Gängen aufweist. Die eingeleitete Leistung verzweigt sich zum einen zu dem Hydrostatgetriebe 29 und zum anderen auf eine Eingangswelle des Summierungsgetriebes 30.

Durch das Summierungsgetriebe 30 werden die Drehzahlen und Drehmomente des Hydrostatgetriebes 29 und des Verbrennungsmotors 1 zusammengeführt, wobei mit Hilfe von Schaltelementen verschiedene Gänge anwählbar sind, indem die Ausgangswelle des Summierungsgetriebes 30 über unterschiedliche Übersetzungsstufen mit dem Fahrgetriebeabtrieb 3 gekoppelt wird.

### Bezugszeichen

- 1: Verbrennungsmotor
- 2: Stufenlos-Getriebe
- 3: Abtrieb des Stufenlos-Getriebes
- 4: Längsverteilergetriebe
- 5: Rangegruppe
- 6: Vorgelegewelle
- 7: Verzahnung
- 8: Kegelraddifferential
- 9: Vorderachse
- 10: Hinterachse
- 11: Differentialsperre
- 12: Parksperre
- 13: Schaltelement
- 14: Losrad
- 15: Festrad
- 16: Festrad
- 17: Festrad
- 18: Festrad
- 19: Losrad
- 20: Abtrieb des Verteilergetriebes
- 21: Festrad
- 22: Losrad
- 23: Festrad
- 24: Losrad
- 25: Losrad
- 26: Festrad
- 27: Festrad
- 28: Festrad
- 29: Hydrostatgetriebe
- 30: Summierungsgetriebe
- 31: Bereichsgruppe

## Patentansprüche

1. Antriebsstrang eines Kraftfahrzeuges umfassend ein stufenloses hydrostatisch-mechanisches Leistungsverzweigungsgetriebe (2), mit einem stufenlos verstellbaren Hydrostatgetriebe (29) und einem Summierungsgetriebe (30), wobei mittels des Summierungsgetriebes (30) die Drehzahlen und Drehmomente des Hydrostatgetriebes (29) und eines Verbrennungsmotors (1) zusammengeführt werden, wobei der Abtrieb (3) des Leistungsverzweigungsgetriebes (2) über ein Kegelraddifferenzial (8) eine Vorderachse (9) und eine Hinterachse (10) antreibt, **dadurch gekennzeichnet, dass** das Kegelraddifferenzial in einem Längsverteilergetriebe (4) angeordnet ist und zur Leistungsverteilung auf die Gelenkwellenanschlussflansche zu den angetriebenen Achsen des Kraftfahrzeugs ausgebildet ist, wobei das Längsverteilergetriebe mit dem Abtrieb des stufenlosen hydrostatisch-mechanisches Leistungsverzweigungsgetriebe (2) verbunden ist, und das Längsverteilergetriebe eine Rangegruppe (5) aufweist, und das Längsverteilergetriebe ein Schaltelement aufweist, durch dessen Betätigung in der Rangegruppe ein Straßengang oder ein Geländegang schaltbar ist.

2. Antriebsstrang eines Kraftfahrzeuges nach Anspruch 1, **dadurch gekennzeichnet, dass** die Rangegruppe (5) ein auf dem Abtrieb (3) des Stufenlos-Getriebes (2) angeordnetes Schaltelement (13) aufweist, mittels dessen zur Erzielung eines Geländeganges ein erstes Losrad (22) mit dem Abtrieb 3 lösbar verbindbar ist, welches mit einem ersten Festrad (23) einer Vorgelegewelle (6) kämmt, wobei die Leistung von der Vorgelegewelle (6) über ein zweites Festrad (15), ein zweites auf dem Abtrieb (3) angeordnetes Losrad (14) und eine mit dem Kegelraddifferential (8) verbundene Verzahnung (7) auf das Kegelraddifferential (8) übertragen wird, wobei zur Realisierung eines Straßenganges das zweite Losrad (14) durch entsprechende Betätigung des Schaltelementes (13) mit dem Abtrieb (3) drehfest verbindbar ist, so dass die Leistung über das Losrad (14) auf das Kegelraddifferential (8) übertragen wird.

3. Antriebsstrang eines Kraftfahrzeuges nach Anspruch 1, **dadurch gekennzeichnet, dass** die Rangegruppe (5) ein mit dem Abtrieb (3) des Stufenlos-Getriebes (2) verbundenes Festrad (16) aufweist, welches mit einem Festrad (17) einer Vorgelegewelle (6) kämmt, wobei ein weiteres Festrad (18) der Vorgelegewelle (6) mit einem Losrad (19) in Eingriff steht, welches durch entsprechende Betätigung eines auf dem Abtrieb (20) des Verteilergetriebes (4) angeordneten Schaltelementes (13) mit dem Abtrieb (20) des Verteilergetriebes (4) zum Schalten eines Geländeganges lösbar verbindbar ist und wobei durch eine entsprechende Betätigung des Schaltelementes (13) der Abtrieb (20) des Verteilergetriebes (4) mit dem Abtrieb (3) des Stufenlos-Getriebes (2) lösbar verbindbar ist, wodurch ein Straßengang realisiert wird, wobei der Abtrieb (20) des Verteilergetriebes (4) über ein Festrad (21) und eine mit dem Kegelraddifferential (8) verbundene Verzahnung (7) mit dem Kegelraddifferential (8) verbunden ist und dieses antreibt.

4. Antriebsstrang eines Kraftfahrzeuges nach Anspruch 1, **dadurch gekennzeichnet, dass** auf dem Abtrieb (3) des Stufenlos-Getriebes (2) ein erstes Losrad (24) und ein zweites Losrad (25) angeordnet sind, die mittels eines Schaltelementes (13) zum Schalten des jeweiligen Ganges mit dem Abtrieb (3) lösbar verbindbar sind, wobei die Losräder (24, 25) jeweils mit einem auf einer Vorgelegewelle (6) angeordneten Festrad (26, 27) kämmen und wobei zur Übertragung der Leistung auf das Kegelraddifferential (8) auf der Vorgelegewelle (6) ein weiteres Festrad (28) angeordnet ist, welches mit einer mit dem Kegelraddifferential (8) verbundenen Verzahnung (7) kämmt.

5. Antriebsstrang eines Kraftfahrzeuges nach einem der vorangehenden Ansprüche, **dadurch gekennzeichnet, dass** das Kegelraddifferential (8) eine Differentialsperre (11) aufweist.

6. Antriebsstrang eines Kraftfahrzeuges nach einem der vorangehenden Ansprüche, **dadurch gekennzeichnet, dass** er eine Parksperre (12) oder eine Parkbremse aufweist.

7. Antriebsstrang eines Kraftfahrzeuges nach einem der vorangehenden Ansprüche, **dadurch gekennzeichnet, dass** die Schaltelemente der Rangegruppe (5), der optionalen Parksperre (12) und der optionalen Differentialsperre (11) als formoder reibschlüssige Schaltelemente ausgeführt sind.

8. Antriebsstrang eines Kraftfahrzeuges nach einem der vorangehenden Ansprüche, **dadurch gekennzeichnet, dass** das Stufenlos-Getriebe (2) als stufenloses hydrostatisch-mechanisches Leistungsverzweigungsgetriebe ausgeführt ist, welches ein stufenlos verstellbares Hydrostatgetriebe (29) mit einer volumenverstellbaren und einer volumenkonstanten Einheit, ein Summierungsgetriebe (30) und ein Bereichsgetriebe (31) mit mehreren schaltbaren Gängen aufweist.

## Claims

1. Drivetrain of a motor vehicle, comprising a continuously variable hydrostatic-mechanical power split transmission (2), having an infinitely adjustable hydrostatic transmission (29) and having a summing transmission (30), wherein the rotational speeds and torques of the hydrostatic transmission (29) and of an internal combustion engine (1) are combined by means of the summing transmission (30), wherein the drive output (3) of the power split transmission (2) drives a front axle (9) and a rear axle (10) via a bevel-gear differential (8), **characterized in that** the bevel-gear differential is arranged in an interaxle transfer box (4) and is designed for distributing power between the articulated shaft connecting flanges to the driven axles of the motor vehicle, wherein the interaxle transfer box is connected to the drive output of the continuously variable hydrostatic-mechanical power split transmission (2), and the interaxle transfer box has a range unit (5), and the interaxle transfer box has a shift element, by means of the actuation of which an on-road gear or an off-road gear can be engaged in the range unit.

2. Drivetrain of a motor vehicle according to Claim 1, **characterized in that** the range unit (5) has a shift element (13) which is arranged on the drive output (3) of the continuously variable transmission (2) and by means of which a first loose wheel (22) can be detachably connected to the drive output (3) in order to realize an off-road gear, which loose wheel meshes with a first fixed wheel (23) of a countershaft (6), wherein the power is transmitted from the countershaft (6) to the bevel-gear differential (8) via a second fixed wheel (15), a second loose wheel (14) arranged on the drive output (3), and a toothing (7) connected to the bevel-gear differential (8), wherein to realize an on-road gear, by means of suitable actuation of the shift element (13), the second loose wheel (14) can be connected to the drive output (3) for conjoint rotation therewith, such that the power is transmitted to the bevel-gear differential (8) via the loose wheel (14).

3. Drivetrain of a motor vehicle according to Claim 1, **characterized in that** the range unit (5) has a fixed wheel (16) which is connected to the drive output (3) of the continuously variable transmission (2) and which meshes with a fixed wheel (17) of a countershaft (6), wherein a further fixed wheel (18) of the countershaft (6) engages with a loose wheel (19) which, by means of suitable actuation of a shift element (13) arranged on the drive output (20) of the transfer box (4), can be detachably connected to the drive output (20) of the transfer box (4) in order to engage an off-road gear, and wherein by means of suitable actuation of the shift element (13), the drive output (20) of the transfer box (4) can be detachably connected to the drive output (3) of the continuously variable transmission (2), thereby realizing an on-road gear, wherein the drive output (20) of the transfer box (4) is connected to and drives the bevel-gear differential (8) via a fixed wheel (21) and a toothing (7) which is connected to the bevel-gear differential (8).

4. Drivetrain of a motor vehicle according to Claim 1, **characterized in that** on the drive output (3) of the continuously variable transmission (2) there are arranged a first loose wheel (24) and a second loose wheel (25) which can be detachably connected to the drive output (3) by means of a shift element (13) in order to engage the respective gear, wherein the loose wheels (24, 25) mesh in each case with a fixed wheel (26, 27) which is arranged on a countershaft (6), and wherein to transmit the power to the bevel-gear differential (8), there is arranged on the countershaft (6) a further fixed wheel (28) which meshes with a toothing (7) connected to the bevel-gear differential (8).

5. Drivetrain of a motor vehicle according to one of the preceding claims, **characterized in that** the bevel-gear differential (8) has a differential lock (11).

6. Drivetrain of a motor vehicle according to one of the preceding claims, **characterized in that** it has a parking lock (12) or a parking brake.

7. Drivetrain of a motor vehicle according to one of the preceding claims, **characterized in that** the shift elements of the range unit (5), of the optional parking lock (12) and of the optional differential lock (11) are designed as positively locking or frictionally engaging shift elements.

8. Drivetrain of a motor vehicle according to one of the preceding claims, **characterized in that** the continuously variable transmission (2) is designed as a continuously variable hydrostatic-mechanical power split transmission which has an infinitely adjustable hydrostatic transmission (29), the latter having a unit of variable volume and a unit of constant volume, having a summing transmission (30) and having a range transmission (31) having a plurality of engageable gears.

## Revendications

1. Chaîne cinématique d'un véhicule automobile, comprenant une transmission à répartition de puissance hydrostatique-mécanique à variation continue (2), avec une transmission hydrostatique à variation continue (29) et une transmission additive (30), les vitesses de rotation et les couples de la transmission hydrostatique (29) et d'un moteur à combustion interne (1) étant combinés au moyen de la transmission additive (30), la prise de force (3) de la transmission à répartition de puissance (2) entraînant par le biais d'un différentiel à pignon conique (8) un essieu avant (9) et un essieu arrière (10), **caractérisée en ce que** le différentiel à pignon conique est disposé dans une transmission intermédiaire longitudinale (4) et est réalisé en vue de répartir la puissance sur les brides de raccordement d'arbres de transmission aux essieux menés du véhicule automobile, la transmission intermédiaire longitudinale (4) étant connectée à la prise de force de la transmission à répartition de puissance hydrostatique-mécanique à variation continue (2), et la transmission intermédiaire longitudinale présentant un groupe-relais (5) et la transmission intermédiaire longitudinale présentant un élément de commutation dont l'actionnement permet de commuter un rapport route ou un rapport tout-terrain dans le groupe-relais.

2. Chaîne cinématique d'un véhicule automobile selon la revendication 1, **caractérisée en ce que** le groupe-relais (5) présente un élément de commutation (13) disposé sur la prise de force (3) de la transmission à variation continue (2), au moyen duquel, pour obtenir un rapport tout-terrain, un premier pignon fou (22) peut être connecté de manière détachable à la prise de force (3), lequel s'engrène avec un premier pignon fixe (23) d'un arbre secondaire (6), la puissance de l'arbre secondaire (6) étant transmise au différentiel à pignon conique (8) par le biais d'un deuxième pignon fixe (15), d'un deuxième pignon fou (14) disposé sur la prise de force (3), et d'une denture (7) connectée au différentiel à pignon conique (8), le deuxième pignon fou (14), pour réaliser un rapport route, pouvant être connecté de manière solidaire en rotation à la prise de force (3) par actionnement correspondant de l'élément de commutation (13), de sorte que la puissance soit transmise par le biais du pignon fou (14) au différentiel à pignon conique (8).

3. Chaîne cinématique d'un véhicule automobile selon la revendication 1, **caractérisée en ce que** le groupe-relais (5) présente un pignon fixe (16) connecté à la prise de force (3) de la transmission à variation continue (2), lequel s'engrène avec un pignon fixe (17) d'un arbre secondaire (6), un pignon fixe supplémentaire (18) de l'arbre secondaire (6) étant en prise avec un pignon fou (19), qui, par actionnement correspond d'un élément de commutation (13) disposé sur la prise de force (20) de la transmission intermédiaire (4), peut être connecté de manière détachable à la prise de force (20) de la transmission intermédiaire (4) pour commuter un rapport tout-terrain, et la prise de force (20) de la transmission intermédiaire (4) pouvant être connectée de manière détachable à la prise de force (3) de la transmission à variation continue (2) par un actionnement correspondant de l'élément de commutation (13), de sorte qu'un rapport route soit réalisé, la prise de force (20) de la transmission intermédiaire (4) étant connectée au différentiel à pignon conique (8) par le biais d'un pignon fixe (21) et d'une denture (7) connectée au différentiel à pignon conique (8) et entraînant celui-ci.

4. Chaîne cinématique d'un véhicule automobile selon la revendication 1, **caractérisée en ce que** sur la prise de force (3) de la transmission à variation continue (2) sont disposés un premier pignon fou (24) et un deuxième pignon fou (25), qui peuvent être connectés à la prise de force (3) de manière détachable au moyen d'un élément de commutation (13) pour commuter le rapport respectif, les pignons fous (24, 25) s'engrenant à chaque fois avec un pignon fixe (26, 27) disposé sur un arbre secondaire (6), et un pignon fixe supplémentaire (28) étant disposé sur l'arbre secondaire (6) pour le transfert de la puissance au différentiel à pignon conique (8), lequel pignon fixe (28) s'engrène avec une denture (7) connectée au différentiel à pignon conique (8).

5. Chaîne cinématique d'un véhicule automobile selon l'une quelconque des revendications précédentes, **caractérisée en ce que** le différentiel à pignon conique (8) présente un verrouillage de différentiel (11).

6. Chaîne cinématique d'un véhicule automobile selon l'une quelconque des revendications précédentes, **caractérisée en ce qu'**elle présente un verrouillage de stationnement (12) ou un frein de stationnement.

7. Chaîne cinématique d'un véhicule automobile selon l'une quelconque des revendications précédentes, **caractérisée en ce que** les éléments de commutation du groupe-relais (5), le verrouillage de stationnement optionnel (12) et le verrouillage de différentiel optionnel (11) sont réalisés sous forme d'éléments de commutation à engagement par coopération de forme ou par friction.

8. Chaîne cinématique d'un véhicule automobile selon l'une quelconque des revendications précédentes, **caractérisée en ce que** la transmission à variation continue (2) est réalisée sous forme de transmission à répartition de puissance hydrostatique-mécanique à variation continue qui présente une transmission hydrostatique à variation continue (29) avec une unité de volume variable et une unité de volume constant, une transmission additive (30) et une transmission à gamme (31) avec plusieurs rapports commutables.
